# FASCICULE DE BREVET EUROPEEN

(11) **EP 1 476 008 B1**
(45) Date de publication et mention de la délivrance du brevet: **17.10.2007**
(21) Numéro de dépôt: 03709926.4
(22) Date de dépôt: 06.02.2003
(51) Int. Cl.: A01D 84/00

(54) **MACHINE AGRICOLE POUR GROUPER DES PRODUITS SE TROUVANT SUR LE SOL**
LANDWIRTSCHAFTLICHE MASCHINE ZUM GRUPPIEREN VON AUF DEM BODEN LIEGENDEN PRODUKTEN
AGRICULTURAL MACHINE FOR BUNDLING PRODUCTS LYING ON THE GROUND

(30) Priorité: 12.02.2002 FR 0201850
(43) Date de publication de la demande: 17.11.2004
(73) Titulaire: KUHN S.A., 67706 Saverne Cedex (FR)
(72) Inventeur: HIRONIMUS, Jeannot, F-67440 Schewebwiller (FR); STUTZMANN, Olivier, F-57370 Zilling (FR)
(74) Mandataire: Andres, Jean-Claude
(86) Numéro de dépôt international: PCT/FR2003/000372
(87) Numéro de publication internationale: WO 2003/067960

(56) Documents cités:
- WO-A-87/06793
- FR-A- 2 663 189
- GB-A- 2 194 422
- US-A- 2 168 266

## Description

La présente invention se rapporte à une machine agricole pour grouper des produits tels que de l'herbe, du foin ou de la paille, qui se trouvent sur le sol. Elle possède notamment un bâti principal portant un premier dispositif de ramassage et un deuxième dispositif de ramassage qui se situent l'un à côté de l'autre durant le travail et auxquels sont associés respectivement un premier dispositif d'andainage et un deuxième dispositif d'andainage.

Lesdits dispositifs d'andainage reçoivent les produits ramassés par les dispositifs de ramassage. Ils peuvent coopérer pour la formation d'un andain central déposé entre-eux ou bien la formation d'un andain latéral déposé sur un des côtés de la machine. Dans ce dernier cas il est possible, en faisant un aller et un retour avec la machine, de regrouper sur un même andain une importante quantité de produits.

Une machine connue de ce genre permet essentiellement de ramasser des produits se trouvant déjà sur deux andains en vue de les regrouper en un andain de plus grand volume. De ce fait, les possibilités d'utilisation de cette machine sont relativement restreintes.

La demande de brevet WO 87/06793 se rapporte à une machine qui comporte deux tambours de ramassage disposés côte à côte. La largeur de travail de cette machine est ainsi limitée par la largeur desdits tambours. De plus, des produits peuvent se coincer entre ces deux tambours et ainsi perturber le déroulement du travail.

La présente invention a notamment pour but de proposer une machine telle que décrite dans l'introduction et qui peut également ramasser sur une grande largeur les produits qui sont étalés sur toute la surface du sol. Cela est notamment le cas lorsqu'il s'agit d'herbe coupée et déposée sur de petits andains ou dispersée pour améliorer son séchage.

A cet effet, une importante caractéristique de l'invention consiste en ce que la machine comporte des moyens de séparation situés à l'avant des extrémités intérieures voisines des dispositifs de ramassage. Ces moyens séparent les produits étalés sur le sol et dégagent la bande de terrain située entre les deux dispositifs de ramassage pour leur permettre d'avancer.

Lesdits moyens de séparation dirigent avantageusement les produits déplacés vers les dispositifs de ramassage. Ils évitent ainsi les pertes de produits entre lesdits dispositifs ainsi que les accrochages ou les enroulements de produits aux bords intérieurs et sur les roues porteuses de ces dispositifs.

Selon une autre caractéristique de l'invention la machine comporte des moyens de séparation situés à l'avant des extrémités extérieures des dispositifs de ramassage. Ces moyens dégagent les bandes de terrain situées aux deux extrémités de la machine. Ils favorisent aussi les déplacements des dispositifs de ramassage et augmentent leur largeur de travail.

Les moyens de séparation précités peuvent être constitués par des organes tels que des disques ou des tambours de râtelage.

D'autres caractéristiques et avantages de l'invention ressortiront des revendications et de la description ci-après d'exemples de réalisation non limitatifs de l'invention, avec références aux dessins annexés dans lesquels :
- la figure 1 représente une vue de dessus d'un premier exemple de réalisation d'une machine selon l'invention ;
- la figure 2 représente une vue de côté de la machine selon la figure 1;
- la figure 3 représente une vue de dessus d'un deuxième exemple de réalisation d'une machine selon l'invention ;
- la figure 4 représente une vue de côté de la machine selon la figure 3.

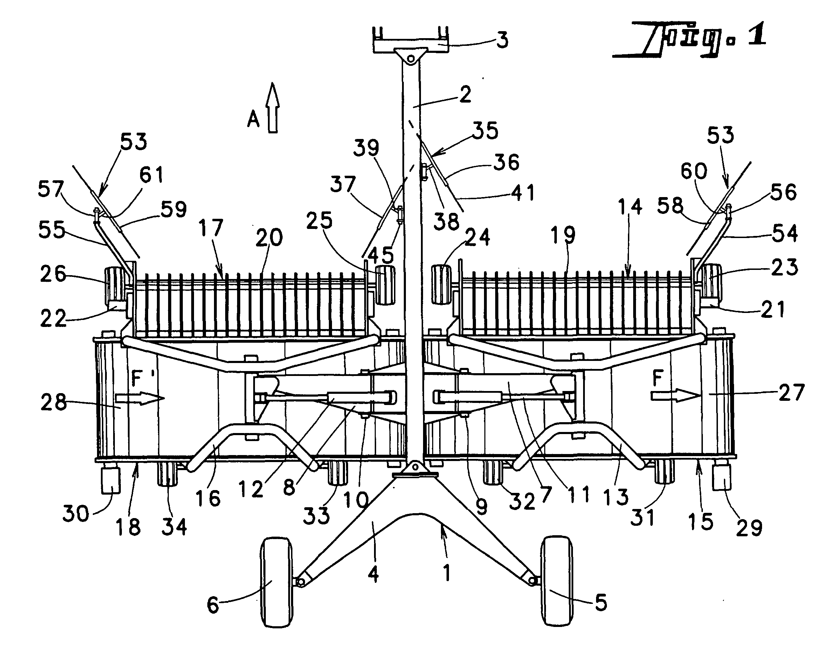

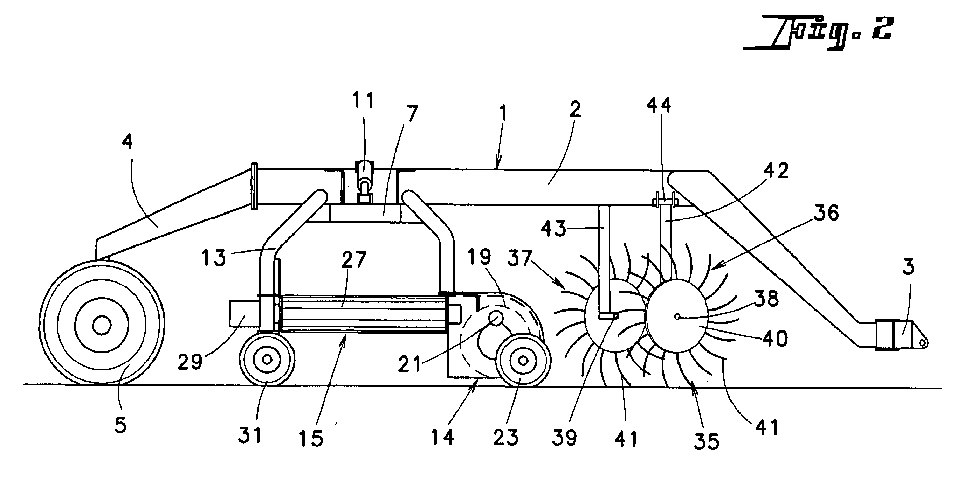

Telle qu'elle est représentée sur les figures 1 et 2, la machine selon l'invention comporte un bâti principal (1). Celui-ci est constitué par une poutre centrale (2) qui possède à son extrémité avant un système d'accouplement (3) pour l'accrocher à un tracteur d'entraînement et, à son extrémité arrière, une traverse (4) avec deux roues de déplacement (5 et 6) qui reposent sur le sol. Sur cette poutre (2) sont articulés deux bras (7 et 8) à l'aide d'axes (9 et 10) qui sont sensiblement parallèles à la poutre (2). Ces bras (7 et 8) sont en sus reliés à la poutre (2) au moyen de vérins hydrauliques (11 et 12) qui permettent de les déplacer autour desdits axes d'articulation (9 et 10).

Le premier bras (7) s'étend, vu dans le sens d'avancement (A), sur le côté droit de la poutre (2) et porte un cadre (13) auquel sont reliés un premier dispositif de ramassage (14) et un premier dispositif d'andainage (15) qui est associé audit premier dispositif de ramassage (14) et se situe immédiatement derrière celui-ci. L'autre bras (8) s'étend sur le côté gauche de la poutre (2) et porte un cadre (16) auquel sont reliés un deuxième dispositif de ramassage (17) et un deuxième dispositif d'andainage (18) qui est associé audit deuxième dispositif de ramassage (17) et se situe immédiatement derrière celui-ci. Comme cela ressort de la figure 1, en position de travail, les deux dispositifs de ramassage (14 et 17) sont sensiblement alignés et se situent à une faible distance l'un de l'autre. Ils sont constitués par des pick-up (19 et 20) animés par des moteurs hydrauliques (21 et 22) et supportés par des roues (23 à 26) qui s'appuient sur le sol. Les dispositifs d'andainage (15 et 18) sont constitués par des bandes transporteuses (27 et 28). Celles-ci sont animées par des moteurs hydrauliques (29 et 30) dont les sens de rotation peuvent être inversés. Ces bandes transporteuses (27 et 28) peuvent être déplacées latéralement sur les cadres (13 et 16) afin de modifier leur écartement. Ces cadres (13 et 16) sont avantageusement articulés sur les bras (7 et 8) et possèdent en sus des roues (31 à 34) qui s'appuient sur le sol.

La poutre (2) porte également des moyens de séparation (35) situés à l'avant des extrémités intérieures voisines des dispositifs de ramassage (14 et 17). Ces moyens (35) sont constitués par deux disques de râtelage (36 et 37) pouvant chacun tourner autour d'un axe (38 et 39) sensiblement horizontal et oblique par rapport à la direction d'avancement (A). Chacun de ces disques de râtelage (36 et 37) est constitué par un support circulaire (40) muni de dents (41) sur toute sa périphérie. Ils sont disposés de manière à former pratiquement un V dont la pointe est dirigée dans la direction d'avancement (A). Leurs trajectoires peuvent cependant se recouvrir partiellement dans la zone située sous la poutre (2). A cet effet, ils peuvent être légèrement décalés l'un par rapport à l'autre dans la direction d'avancement (A) et être placés de sorte que le disque de râtelage (37) le plus en arrière s'étende en partie derrière l'autre disque (36) (voir figure 1).

Ces disques de râtelage (36 et 37) sont liés à des supports (42 et 43) qui sont articulés au moyen d'axes (44 et 45) sur la poutre (2). Lesdits axes d'articulation (44 et 45) sont sensiblement horizontaux et permettent aux disques (36 et 37) de se déplacer en hauteur (voir figure 2). Ceux-ci peuvent alors être en contact avec le sol et être entraînés en rotation par suite de leur frottement sur ledit sol lorsque la machine est déplacée dans la direction d'avancement (A).

Selon une variante de réalisation non représentée, les moyens de séparation sont constitués par un seul disque de râtelage (36 ou 37) de plus grand diamètre et pouvant tourner autour d'un axe sensiblement horizontal et oblique à la direction d'avancement (A).

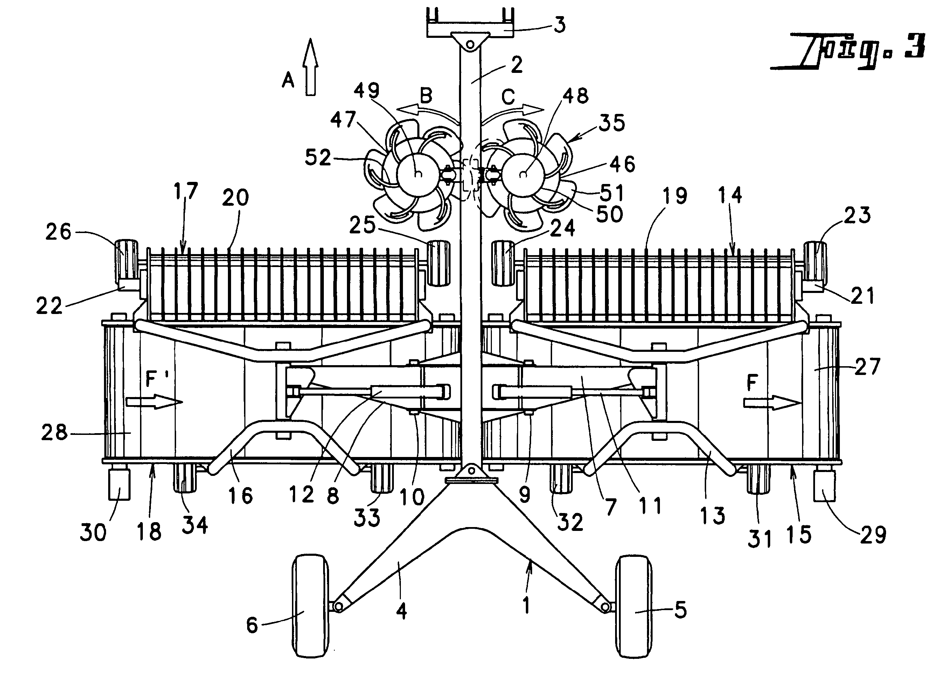

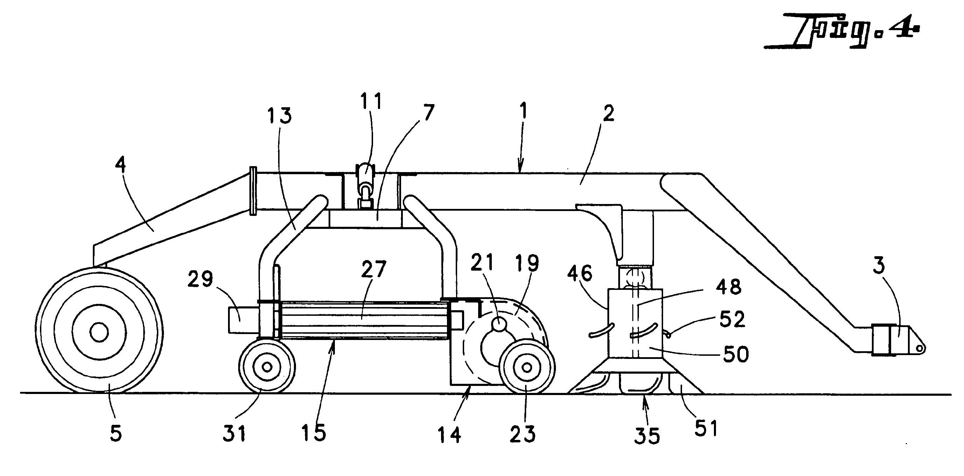

Dans l'exemple de réalisation selon les figures 3 et 4, les moyens de séparation (35) sont constitués par deux tambours de râtelage (46 et 47) tournant autour d'axes (48 et 49) sensiblement verticaux. Ces tambours (46 et 47) sont disposés côte à côte et sont reliés à la poutre (2). Ils sont entraînés en rotation de manière à tourner en divergence à l'avant (flèches B et C) au moyen de moteurs hydrauliques ou d'arbres de transmission qui sont animés depuis l'arbre de prise de force du tracteur.

Chaque tambour (46, 47) se compose d'un corps cylindrique (50) qui porte à sa partie inférieure une jupe souple (51) pour ramasser et déplacer les produits se trouvant sur le sol. Le corps cylindrique (50) de chaque tambour (46, 47) porte également des entraîneurs (52) qui se situent au-dessus de la jupe souple (51) correspondante et favorisent le déplacement des produits.

Selon une variante de réalisation non représentée, la poutre (2) ne porte qu'un seul tambour (46 ou 47) de plus grand diamètre pour séparer les produits.

La machine selon l'invention peut en sus comporter des moyens de séparation (53) situés à l'avant des extrémités extérieures des dispositifs de ramassage (14 et 17). Il peut s'agir de disques ou de tambours de râtelage conformes à ceux décrits ci-dessus. Dans l'exemple représenté sur la figure 1, chaque dispositif de ramassage (14, 17) porte à son extrémité extérieure un bras (54, 55) qui est dirigé obliquement vers l'avant et vers l'extérieur. Sur chacun de ces bras (54, 55) est articulé un support (56, 57) muni d'un disque de râtelage (58, 59) qui est disposé obliquement par rapport à la direction d'avancement (A) de manière à déplacer les produits de l'extérieur vers le dispositif de ramassage (14, 17) correspondant. Ces disques de râtelage (58 et 59) sont comparables aux disques de râtelage (36 et 37) précités. Ils peuvent être entraînés en rotation autour de leurs axes (60 et 61) par le frottement sur le sol.

Ces disques de râtelage (58 et 59) peuvent également être remplacés par des tambours de râtelage sensiblement verticaux qui sont entraînés en rotation par des moteurs hydrauliques.

Durant le travail, la machine est accrochée à un tracteur qui la déplace dans la direction d'avancement (A). La partie avant de la poutre (2) est abaissée par rapport au tracteur jusqu'à ce que les moyens de séparation (35) touchent le sol. Les bras (7 et 8) sont abaissés en position sensiblement horizontale à l'aide des vérins hydrauliques (11 et 12), de sorte que les roues (23 à 26 et 31 à 34) roulent sur le sol. Lorsque la machine selon l'exemple des figures 1 et 2 avance, les disques de râtelage (36 et 37) sont entraînés en rotation autour de leurs axes (38 et 39). Ils séparent alors les produits qu'ils rencontrent et les déplacent vers la droite et vers la gauche en direction des pick-up (19 et 20). Ces disques de râtelage (36 et 37) dégagent ainsi une bande de terrain dont la largeur est au moins égale à l'écartement entre les deux pick-up (19 et 20) afin que la totalité des produits se trouvant sur la trajectoire de la machine arrive dans les zones d'action desdits pick-up (19 et 20).

Les deux disques de râtelage (58 et 59) qui se situent aux extrémités extérieures des pick-up (19 et 20) tournent également autour de leurs axes (60 et 61) en raison du frottement sur le sol. Ils poussent alors les produits qu'ils rencontrent vers le milieu de la machine, devant leurs pick-up (19 et 20) respectifs et dégagent une bande de terrain de chaque côté de la machine.

Lesdits pick-up (19 et 20) sont alors animés par les moteurs hydrauliques (21 et 22). Ils ramassent les produits au sol et les déplacent vers le haut et vers l'arrière sur les bandes transporteuses (27 et 28). Ces dernières sont elles-aussi entraînées par leurs moteurs hydrauliques (29 et 30) de sorte qu'elles se déplacent dans la même direction qui est indiquée par les flèches (F et F'). La deuxième bande transporteuse (28) achemine alors ses produits sur la première bande (27) qui dépose la totalité des produits sous forme d'un andain latéral sur le côté droit de la machine. Il serait bien entendu possible de déposer l'andain sur le côté gauche de la machine en inversant simplement le sens de déplacement des bandes transporteuses (27 et 28). Pour former un andain central, il suffit d'écarter les deux bandes transporteuses (27 et 28) et d'inverser le sens de déplacement de la première bande (27). Dans ce cas, les produits retombent sur le sol sous forme d'un andain en passant entre les deux bandes transporteuses (27 et 28).

Dans l'exemple selon les figures 3 et 4, les tambours de râtelage (46 et 47) sont abaissés, par l'intermédiaire de la poutre (2), jusqu'à ce que leurs jupes (51) touchent le sol. Ensuite, ils sont entraînés dans le sens des flèches (B et C) et déplacent les produits qu'ils rencontrent vers les côtés extérieurs et les déposent à l'avant des deux pick-up (19 et 20). Ils dégagent ainsi les produits situés sur la bande de terrain centrale de sorte que la totalité des produits puisse être reprise par les pick-up (19 et 20) comme cela a été décrit ci-dessus pour l'exemple des figures 1 et 2.

La machine conforme à l'invention permet de regrouper sur un andain de gros volume le fourrage se trouvant préalablement sur une importante largeur et ce, sans qu'il soit, pour l'essentiel, déplacé à même le sol qui pourrait provoquer des souillures. Ce regroupement permet aussi de réduire le nombre de passages avec les machines de récolte telles que les presses ou les ensileuses.

Pour le transport, l'avant de la poutre (2) est soulevé pour éloigner les dispositifs de séparation (35) du sol. Ensuite les deux bras (7 et 8) avec les dispositifs de ramassage (14 et 17) et les dispositifs d'andainage (15 et 18) sont relevés à la verticale autour des axes d'articulation (9 et 10).

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection défini par les revendications.

## Revendications

1. Machine pour grouper des produits qui se trouvent sur le sol, ayant notamment un bâti principal (1) portant un premier dispositif de ramassage (14) et un deuxième dispositif de ramassage (17) qui se situent pratiquement l'un à côté de l'autre durant le travail et auxquels sont associés respectivement un premier dispositif d'andainage (15) et un deuxième dispositif d'andainage (18), ***caractérisée par** le fait* **qu**'elle comporte des moyens de séparation (35) situés à l'avant des extrémités intérieures voisines des dispositifs de ramassage (14 et 17).

2. Machine selon la revendication **1, *caractérisée par le fait* que** les moyens de séparation (35) sont constitués par au moins un disque de râtelage (36, 37) pouvant tourner autour d'un axe (38, 39) sensiblement horizontal et oblique par rapport à la direction d'avancement (A).

3. Machine selon la revendication 2, ***caractérisée par le fait* qu**'elle comporte deux disques de râtelage (36 et 37) disposés de manière à former pratiquement un V dont la pointe est dirigée dans la direction d'avancement (A).

4. Machine selon la revendication 3, ***caractérisée par le fait* que** les disques de râtelage (36 et 37) sont légèrement décalés l'un par rapport à l'autre dans la direction d'avancement (A).

5. Machine selon l'une quelconque des revendications 2 à 4, ***caractérisée par le fait* que** les disques de râtelage (36 et 37) sont liés à des supports (42 et 43) articulés sur le bâti principal (1).

6. Machine selon l'une quelconque des revendications 2 à 5, ***caractérisée par le fait* que** les disques de râtelage (36 et 37) sont entraînés en rotation par leur frottement sur le sol.

7. Machine selon la revendication 1, ***caractérisée par le fait* que** les moyens de séparation (35) sont constitués par au moins un tambour de râtelage (46, 47) tournant autour d'un axe (48, 49) sensiblement vertical.

8. Machine selon la revendication 7, ***caractérisée par** l****e fait* qu**'elle comporte au moins deux tambours de râtelage (46 et 47) disposés côte à côte.

9. Machine selon la revendication 8, ***caractérisée par le fait* que** les deux tambours de râtelage (46 et 47) sont entraînés en rotation de manière à tourner en divergence à l'avant.

10. Machine selon l'une quelconque des revendications 7 à 9, ***caractérisée par le fait* que** les tambours de râtelage (46 et 47) comportent à leur partie inférieure une jupe souple (51) pour ramasser et déplacer les produits.

11. Machine selon l'une quelconque des revendications 7 à 10, ***caractérisée par le fait* que** les tambours de râtelage (46 et 47) comportent des entraîneurs (52) situés au-dessus des jupes souples (51).

12. Machine selon la revendication **1, *caractérisée par le fait* qu**'elle comporte des moyens de séparation (53) situés à l'avant des extrémités extérieures des dispositifs de ramassage (14 et 17).

13. Machine selon la revendication 12, ***caractérisée par le fait* que** les moyens de séparation (53) sont constitués par des disques de râtelage (58 et 59) disposés obliquement à la direction d'avancement (A) de manière à déplacer les produits vers les dispositifs de ramassage (14 et 17).

14. Machine selon la revendication 13, ***caractérisée par** l****e fait* que** les disques de râtelage (58 et 59) sont articulés sur des supports (54 et 55) fixés aux dispositifs de ramassage (14 et 17).

15. Machine selon l'une quelconque des revendications 2 à 6, 13 et 14, ***caractérisée par le fait* que** chaque disque de râtelage (36, 37, 58 et 59) est constitué par un support circulaire (40) muni de dents (41) sur toute sa périphérie.

## Claims

1. Machine for grouping products lying on the ground, particularly having a main frame (1) carrying a first gathering device (14) and a second gathering device (17) which are situated substantially one beside the other during work and to which a first swathing device (15) and a second swathing device (18) are respectively associated, ***characterized in* that** it comprises separation means (35) situated at the front of the inner ends adjacent to the gathering devices (14 and 17).

2. Machine according to claim 1, ***characterized in* that** the separation means (35) consist of at least one raking disk (36, 37) capable of rotating about an axis (38, 39) which is substantially horizontal and oblique relative to the direction of travel (A).

3. Machine according to claim 2, ***characterized in* that** it comprises two raking disks (36 and 37) placed in such a way as to practically form a V whose point is pointing in the direction of travel (A).

4. Machine according to claim 3, ***characterized in* that** the raking disks (36 and 37) are slightly offset one from the other in the direction of travel (A).

5. Machine according to any one of claims 2 to 4, ***characterized in* that** the raking disks (36 and 37) are connected to supports (42 and 43) articulated on the main frame (1).

6. Machine according to any one of claims 2 to 5, ***characterized in* that** the raking disks (36 and 37) are driven in rotation by their friction motion with the ground.

7. Machine according to claim 1, ***characterized in* that** the separation means (35) consist of at least one raking drum (46, 47) rotating about a substantially vertical axis (48, 49).

8. Machine according to claim 7, ***characterized in* that** it comprises at least two raking drums (46 and 47) placed side by side.

9. Machine according to claim 8, ***characterized in* that** the two raking drums (46 and 47) are driven in rotation in such a way as to turn away from one another at the front.

10. Machine according to any one of claims 7 to 9, ***characterized in* that** the raking drums (46 and 47) comprise on their lower part a flexible skirt (51) to gather and move the products.

11. Machine according to any one of claims 7 to 10, ***characterized in* that** the raking drums (46 and 47) comprise driving elements (52) situated above the flexible skirts (51).

12. Machine according to claim 1, ***characterized in* that** it comprises separation means (53) situated in front of the outer ends of the gathering devices (14 and 17).

13. Machine according to claim 12, ***characterized in* that** the separation means (53) consist of raking disks (58 and 59) disposed obliquely relative to the direction of travel (A) in order to move the products toward the gathering devices (14 and 17).

14. Machine according to claim 13, ***characterized in* that** the raking disks (58 and 59) are articulated on supports (54 and 55) fixed to the gathering devices (14 and 17).

15. Machine according to any one of claims 2 to 6, 13 and 14, ***characterized in* that** each raking disk (36, 37, 58 and 59) consists of a circular support (40) fitted with teeth (41) on its entire periphery.

## Patentansprüche

1. Maschine zum Gruppieren von auf dem Boden liegenden Produkten, mit insbesondere einem Hauptgestell (1), das eine erste Sammelvorrichtung (14) und eine zweite Sammelvorrichtung (17) trägt, die sich praktisch Seite an Seite während der Arbeit befinden, und mit denen eine erste Schwadlegevorrichtung (15) bzw. eine zweite Schwadlegevorrichtung (18) verbunden sind, ***dadurch gekennzeichnet,* dass** sie Trennmittel (35) umfasst, die sich vorne an den benachbarten inneren Enden der Sammelvorrichtungen (14 und 17) befinden.

2. Maschine nach Anspruch 1, ***dadurch gekennzeichnet,* dass** die Trennmittel (35) von mindestens einer Rechenscheibe (36, 37) gebildet sind, die sich um eine im Wesentlichen horizontale und schräg zur Vorschubrichtung (A) ausgerichtete Achse (38, 39) drehen kann.

3. Maschine nach Anspruch 2, ***dadurch gekennzeichnet,* dass** sie zwei Rechenscheiben (36 und 37) umfasst, die derart angeordnet sind, dass sie praktisch ein V bilden, dessen Spitze in Vorschubrichtung (A) gerichtet ist.

4. Maschine nach Anspruch 3, ***dadurch gekennzeichnet,* dass** die Rechenscheiben (36 und 37) leicht zueinander in Vorschubrichtung (A) versetzt sind.

5. Maschine nach irgend einem der Ansprüche 2 bis 4, ***dadurch gekennzeichnet,* dass** die Rechenscheiben (36 und 37) mit Stützen (42 und 43) verbunden sind, die am Hauptgestell (1) angelenkt sind.

6. Maschine nach irgend einem der Ansprüche 2 bis 5, ***dadurch gekennzeichnet,* dass** die Rechenscheiben (36 und 37) in Drehung durch ihre Reibung am Boden angetrieben werden.

7. Maschine nach Anspruch 1, ***dadurch gekennzeichnet,* dass** die Trennmittel (35) von mindestens einer Rechenwalze (46, 47) gebildet sind, die sich um eine im Wesentlichen vertikale Achse (48, 49) dreht.

8. Maschine nach Anspruch 7, ***dadurch gekennzeichnet,* dass** sie mindestens zwei Rechenwalzen (46 und 47), die Seite an Seite angeordnet sind, umfasst.

9. Maschine nach Anspruch 8, ***dadurch gekennzeichnet,* dass** die beiden Rechenwalzen (46 und 47) derart in Drehung angetrieben werden, dass sie sich divergierend nach vorne drehen.

10. Maschine nach irgend einem der Ansprüche 7 bis 9, ***dadurch gekennzeichnet,* dass** die Rechenwalzen (46 und 47) in ihrem unteren Teil eine flexible Schürze (51) umfassen, um die Produkte einzusammeln und zu verschieben.

11. Maschine nach irgend einem der Ansprüche 7 bis 10, ***dadurch gekennzeichnet,* dass** die Rechenwalzen (46 und 47) Mitnehmer (52) umfassen, die sich über den flexiblen Schürzen (51) befinden.

12. Maschine nach Anspruch 1, ***dadurch gekennzeichnet,* dass** sie Trennmittel (53) umfasst, die sich vorne an den äußeren Enden der Sammelvorrichtungen (14 und 17) befinden.

13. Maschine nach Anspruch 12, ***dadurch gekennzeichnet,* dass** die Trennmittel (53) von Rechenscheiben (58 und 59) gebildet sind, die schräg zur Vorschubrichtung (A) angeordnet sind, um die Produkte zu den Sammelvorrichtungen (14 und 17) zu verschieben.

14. Maschine nach Anspruch 13, ***dadurch gekennzeichnet,* dass** die Rechenscheiben (58 und 59) auf Stützen (54 und 55) angelenkt sind, die an den Sammelvorrichtungen (14 und 17) befestigt sind.

15. Maschine nach irgend einem der Ansprüche 2 bis 6, 13 und 14, ***dadurch gekennzeichnet,* dass** jede Rechenscheibe (36, 37, 58 und 59) von einer kreisförmigen Stütze (40) gebildet ist, die mit Zähnen (41) auf ihrem gesamten Umfang versehen ist.
